# FASCICULE DE BREVET EUROPEEN

(11) **EP 3 878 084 B1**
(45) Date de publication et mention de la délivrance du brevet: **25.03.2026**
(21) Numéro de dépôt: 19798732.4
(22) Date de dépôt: 29.10.2019
(51) Int. Cl.: H02K 49/04, H02J 3/30, H02J 9/06, H02K 7/02, H02K 7/11, H02K 1/24

(54) **MACHINE D'ALIMENTATION SANS INTERRUPTION**
UNTERBRECHUNGSFREIE STROMVERSORGUNGSMASCHINE
UNINTERRUPTIBLE-POWER-SUPPLY MACHINE

(30) Priorité: 08.11.2018 BE 201805785; 30.08.2019 BE 201905571
(43) Date de publication de la demande: 15.09.2021
(73) Titulaire: KS RESEARCH, société anonyme, 4651 Battice (BE)
(72) Inventeur: SCHOEBRECHTS, Jacques, 4651 Battice (BE); FRIPPIAT, Joseph, 4651 Battice (BE)
(74) Mandataire: Donné, Eddy
(86) Numéro de dépôt international: PCT/IB2019/059252
(87) Numéro de publication internationale: WO 2020/095149

(56) Documents cités:
- EP-A1- 0 741 444
- EP-A1- 1 533 884
- EP-A2- 2 945 263
- EP-A2- 2 989 713
- FR-A- 1 364 072
- GB-A- 1 352 320
- JP-A- H05 115 169
- US-A1- 2010 231 181
- US-A1- 2016 020 675

## Description

L'invention concerne un rotor pour une machine ASI d'alimentation sans interruption machine ASI pourvue d'un tel rotor.

Les machines ASI sont essentiellement destinées à sauvegarder des utilisateurs sensibles aux perturbations d'un réseau électrique, c'est à dire des charges au niveau des utilisateurs, comme par exemple des services de soins intensifs d'hôpitaux ou des entreprises de stockage des données digitales, des services fortement informatisés, pour lesquels une interruption du réseau électrique pendant quelques millisecondes met en danger des vies humaines ou provoque des coûts financiers importants.

Il est connu d'utiliser une machine ASI comprenant une machine synchrone à basse impédance interne pouvant fonctionner comme moteur ou comme alternateur, cette machine synchrone étant couplée à un accumulateur à grande réserve d'énergie cinétique qui est stockée dans une masse métallique en rotation.

Une telle machine est connue du brevet européen EP 1.533.884 du même demandeur décrivant une machine ASI qui comprend une machine synchrone couplée à un accumulateur d'énergie cinétique comprenant essentiellement :
- une carcasse ;
- un arbre principal monté d'une manière rotative dans la carcasse et étant couplé avec la machine synchrone ;
- un tambour creux coaxial pouvant tourner librement autour de l'axe principal et indépendant de celui-ci ;
- un moteur, appelé moteur Pony, pour lancer le tambour jusqu'à une certaine vitesse donnée lors du démarrage de l'ASI pour accumuler de l'énergie cinétique dans le tambour ;
- un rotor fixé sur l'arbre principal sous forme d'un rotor à griffes qui est muni de bobines étant reliées avec une excitatrice pour réaliser un couplage électromagnétique entre le tambour et le rotor en cas de panne du réseau en vue de récupérer l'énergie cinétique stockée dans le tambour afin d'entraîner la machine synchrone quand un courant électrique DC est envoyé dans les bobines du rotor par l'intermédiaire de l'excitatrice.

Cette machine est branchée entre le réseau et les charges des utilisateurs via une self.

En régime sans coupure du réseau, le tambour est lancé à une certaine vitesse de par exemple 3000 tr/min, tandis que la vitesse de l'arbre principal avec le rotor à griffes et le rotor de la machine synchrone est maintenue à une vitesse plus basse de par exemple 1500 tr/min. La différence de vitesse constitue l'énergie cinétique disponible pour entraîner la machine synchrone comme alternateur en cas de panne réseau.

Une machine de ce genre est connue de l'EP 1.533.884. Cette machine présente beaucoup d'avantages par rapport à d'autres machines ASI connues, tels que :
- son encombrement réduit ;
- le fait que le machine de par sa combinaison avec la self et la basse impédance de la machine synchrone joue aussi le rôle de conditionneur de réseau et constitue un filtre vis-à-vis de toutes les perturbations de courte durée qui viendraient sur le réseau et d'un filtre vis-à-vis des harmoniques qui seraient présentes sur la tension fournie aux utilisateurs et/ou sur la tension du réseau en amont de l'ASI;
- la durée de vie des roulements qui supportent l'arbre principal dans la carcasse et le tambour sur l'arbre est liée à la vitesse relative de ces roulements ne dépassant pas les 1500 tr/min dans l'exemple donné ci-dessus ;
- le fait de pouvoir être branchée sur n'importe quel groupe électrogène sans accouplement mécanique qui intervient lors de la coupure du réseau pendant un temps de plus de 10 secondes par exemple ;
- le fait de ne pas avoir besoin de moteur extérieur supplémentaire pour démarrer le système ASI.

La machine ASI de l'EP 1.533.884 est dimensionnée de telle manière que quand une coupure du réseau intervient, la machine dispose d'une énergie cinétique suffisante pour assurer une autonomie minimum de 12 secondes environ avec une puissance de sortie suffisante pour alimenter les utilisateurs.

Par contre, le domaine d'utilisation d'une telle machine est limité quant à son autonomie et quant à la puissance à fournir aux utilisateurs et quant au temps de récupération après une panne de réseau afin que la machine soit rapidement prête à intervenir suite à une nouvelle panne de celui-ci.

L'invention a comme objectif d'améliorer les performances de la machine ASI telles que décrites dans l'EP 1.533.884 et d'augmenter considérablement la puissance électrique que peut fournir l'accumulateur d'énergie cinétique au-delà de la puissance maximum que peut fournir l'accumulateur de la machine ASI de l'EP 1.533. 884 afin de pouvoir garantir une gamme de puissance plus large et une plus grande souplesse d'utilisation d'une puissance de sortie plus élevée combinée avec une autonomie réduite, par exemple cette autonomie étant suffisante pour certaines applications comme des centres de stockage de données digitales ou des processus divers pouvant s'arrêter en quelques secondes sans préjudice pour les utilisateurs.

Cet objectif est envisagé sans pour autant vouloir affecter les avantages de la machine de l'EP 1.5233.884, donc en respectant l'encombrement réduit de l'accumulateur d'énergie cinétique de cette machine ASI.

Cet objectif est atteint en remplaçant le rotor à griffes de la machine ASI de l'EP 1.533.664 par un rotor de la même envergure et d'architecture plus classique d'un rotor d'alternateur, c'est-à-dire muni d'un noyau en fer avec un certain nombre de pôles délimités par des encoches longitudinales réparties autour de la circonférence du noyau qui, pour chaque pôle, est pourvu d'un bobinage embobiné dans les encoches autour du pôle concerné, mais dimensionné de telle manière que la largeur cumulée de la totalité des pôles dans leur partie la plus étroite est au moins égale à la largeur cumulée de la totalité des encoches dans leur partie la plus large, de préférence que la largeur minimale cumulée de la totalité des pôles est au moins le double de la largeur maximale cumulée de la totalité des encoches, la largeur des pôles et des encoches étant mesurée dans une coupe perpendiculaire à l'axe de la machine et donc à l'axe du rotor.

D'autres machines électriques sont connues des documents de brevet JPH05115169, US2010/231181 et US2016/020675, ces machines étant pourvues d'un tel rotor.

Par cette architecture atypique du rotor on augmente la zone active des pôles en même temps qu'on diminue la surface des encoches dans lesquelles sont logés les conducteurs actifs en cuivre. On augmente ainsi la section des noyaux polaires par rapport à la section des encoches qui contiennent le cuivre, la section des pôles étant la surface active qui intervient pour le couplage électromagnétique entre le tambour et le rotor de l'accumulateur afin de maintenir plus longtemps un couple suffisant pour entraîner la machine synchrone dans sa fonction d'alternateur, même pour des puissances nettement supérieures à celles obtenue dans le cas du rotor à griffes. Le rotor est conçu spécialement pour créer beaucoup de pertes électromagnétiques dans le tambour afin de créer un couple plus important entre le tambour et le rotor, sans se préoccuper de réaliser une belle distribution sinusoïdale de l'induction dans l'entrefer et donc pour réaliser un accumulateur d'énergie cinétique à haute puissance pouvant entrainer un alternateur de plus grande puissance, quitte éventuellement à réduire l'autonomie de la machine en dessous des 12 secondes pour les très grandes puissances de la charge en cas de panne du réseau, ce qui est tout à fait acceptable pour certaines applications où l'autonomie peut être réduite en faveur d'une puissance plus grande.

En effet, parce que la surface des encoches a été réduite en faveur de la section active des pôles, il faudra faire passer un très grand courant dans les conducteurs des bobines du rotor pour faire passer un grand flux magnétique au travers des pôles pour les très hautes puissances sans pour autant risquer de détruire les bobinages par l'échauffement rapide de ceux-ci, ce qui peut limiter le temps pendant lequel cette haute puissance peut être maintenue.

A cause du couplage plus prononcé entre le tambour et le rotor dû à la section active augmentée des pôles, le couplage sera maintenu plus longtemps pour des puissances comparables à celles obtenues avec un accumulateur d'énergie avec un rotor à griffes.

Dans le cas du rotor à griffes, le couplage sera par exemple perdu dès que la vitesse du tambour aura chuté sous 1700 tr/min pour une vitesse de rotor du 1500 tr/min. Il reste donc une énergie cinétique correspondant à une différence de vitesse de 200 tr/min qui est inutilisée.

Dans le cas de l'invention par contre, le couplage restera actif plus longtemps jusqu'à 1500 tr/min, ce qui donne une meilleure utilisation de l'énergie cinétique stockée dans le tambour en dessous de 1700 tr/min et donc une autonomie plus longue.

Ainsi on pourra réaliser une machine ASI qui, à la place de la machine connue de l'EP 1.553.884, est caractérisée par une autonomie plus grande, mais qui permet aussi de coupler le nouvel accumulateur d'énergie avec une machine synchrone de plus grande puissance, par exemple une puissance double, pour protéger les utilisateurs, quitte à réduire l'autonomie pendant laquelle cette puissance double pourra être protégée.

Une machine ASI expérimentale selon l'invention a été réalisée montrant des performances améliorées surprenantes par rapport à la machine ASI de l'EP 1.533.884 avec un rotor à griffes du même gabarit :
- une augmentation remarquable du couple et de l'énergie accumulée grâce au nouveau modèle de rotor ;
- un temps de réponse nettement plus court pour atteindre une puissance donnée ;
- une puissance obtenue nettement plus élevée pour le nouveau rotor après un délai donné ;
- une autonomie augmentée de 5 à 20 % à toutes les puissances et des pleines puissances deux à trois fois supérieures ;
- un plus grand domaine d'utilisation en termes de puissances à la sortie de la machine ;
- un niveau d'énergie disponible quasi constant pour la totalité de la gamme de puissances dans le domaine d'utilisation.

En outre,
- la fabrication du nouveau rotor est de construction plus classique et est donc moins coûteuse que la fabrication du rotor à griffes ;
- le nouveau rotor diminue les risques de magnétisation rémanente de l'arbre de la machine et par conséquent ses effets néfastes sur la durée de vie des roulements (pas de bobine axiale).

Le stator du moteur Pony est réalisé de préférence sous forme d'un anneau Gramme avec un bobinage toroïdal qui prend moins de place et permet de réaliser un accumulateur d'énergie cinétique avec un encombrement relativement court.

L'invention concerne aussi un rotor pour un accumulateur d'énergie d'une machine ASI et un accumulateur équipé d'un tel rotor, qui comprend un noyau en fer avec un certain nombre de pôles délimités par des encoches longitudinales réparties autour de la circonférence du noyau qui, pour chaque pôle, est pourvu d'un bobinage embobiné dans les encoches autour du pôle concerné et dont la largeur cumulée de la totalité des pôles dans leur partie la plus étroite est au moins égale à la largeur cumulée de la totalité de encoches dans leur partie la plus large, de préférence dont la largeur cumulée de la totalité des pôles dans leur partie la plus étroite est au moins le double de la largeur de la totalité des encoches dans leur partie la plus large, le rotor étant caractérisé en ce que les pôles ont une largeur différente selon leur position angulaire, comportant des pôles larges, ayant une première largeur minimale, et des pôles étroits, ayant une seconde largeur minimale, qui sont organisés de la façon suivante:
- les pôles doivent être alternativement N & S à la périphérie du rotor;
- les pôles larges doivent être multiples de deux et alternativement N & S à la périphérie du rotor;
- les pôles étroits doivent être multiples de deux.

Une telle organisation des pôles peut être envisagée dans le but de modifier la caractéristique de couple en fonction de la vitesse relative entre le rotor et le tambour.

L'invention concerne également l'utilisation d'un tel rotor dans un accumulateur d'énergie cinétique d'une machine ASI, l'accumulateur d'énergie étant initialement destiné à fonctionner avec un rotor à griffes, l'accumulateur comprenant essentiellement :
- une carcasse ;
- un arbre principal monté d'une manière rotative dans la carcasse et étant couplé avec la machine synchrone ;
- un tambour creux coaxial pouvant tourner librement autour de l'axe principal et indépendant de celui-ci ;
- un moteur, appelé moteur Pony, pour lancer le tambour jusqu'à une certaine vitesse donnée lors du démarrage de l'ASI pour accumuler de l'énergie cinétique dans le tambour ;
- le rotor étant installé en lieu et place du rotor à griffes sur l'arbre principal d'une manière coaxiale avec le tambour et avec le même encombrement, les bobines du rotor étant reliées avec une excitatrice pour réaliser un couplage électromagnétique entre le tambour et le rotor en cas de panne du réseau en vue de récupérer l'énergie cinétique stockée dans le tambour afin d'entraîner la machine synchrone quand un courant électrique DC est envoyé dans les bobines du rotor par l'intermédiaire de l'excitatrice.

Afin de mieux comprendre l'objet de la présente invention, une configuration pratique et préférée d'un accumulateur d'énergie cinétique est dévoilée ci-dessous sur la base des figures jointes en annexe. Ces figures illustrent les éléments suivants:
la figure 1 représente schématiquement un réseau d'électricité muni d'une machine ASI avec un accumulateur d'énergie cinétique selon l'invention ;
la figure 2 représente une échelle supérieure à une coupe transversale de la machine ASI indiquée par la flèche F2 dans la figure 1;
la figure 3 montre en vue latérale le rotor F3 indiqué dans la figure 2;
la figure 4 représente la coupe indiquée par la ligne IV-IV dans la figure 3;
la figure 5 montre, en comparaison avec la figure 4, un rotor classique d'un alternateur du même nombre de pôles;
la figure 6 montre une comparaison entre le graphique de l'énergie disponible en fonction de la puissance de sortie pour une machine ASI selon l'invention et pour une machine ASI selon l'EP 1.533.884 de la même envergure et dans laquelle on a remplacé le rotor à griffes par un rotor selon l'invention;
les figures 7 et 8 montrent une même comparaison mais alors pour les courbes d'autonomie en fonction de la puissance pour les deux machines, respectivement pour la puissance de sortie en fonction de la vitesse différentielle entre le tambour et l'axe principal 50 msec après l'excitation;
la figure 9 représente un autre réseau électrique selon l'invention;
la figure 10 représente une coupe comme celle de la figure 4 pour une réalisation du noyau d'un rotor d'accumulateur d'énergie cinétique selon l'invention.

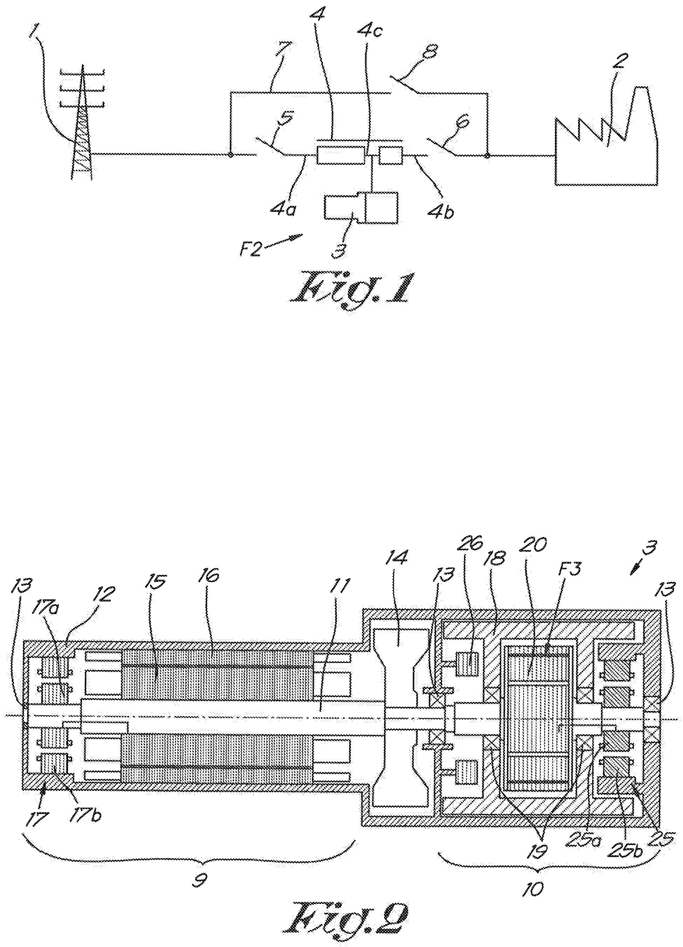

La figure 1 représente schématiquement un réseau électrique urbain ou industriel 1, fournissant de l'énergie électrique à une charge sensible 2 d'un site, la charge 2 étant constituée par tous les utilisateurs dans une usine ou dans un datacenter et nécessitant d'être protégée par une machine d'alimentation électrique sans interruption, appelée machine ASI 3, qui doit intervenir pour alimenter la charge 2 en cas de panne du réseau 1.

Dans l'exemple de la figure 1, la charge 2 est branchée sur le réseau 1 via une self 4 à trois bornes, c'est-à-dire avec une borne d'entrée 4a connectée au réseau 1 par l'intermédiaire d'un disjoncteur d'entrée 5, une borne de sortie 4b connectée à la charge 2 au moyen d'un disjoncteur de sortie 6 et une borne intermédiaire 4c sur laquelle est branchée la machine ASI 3.

La self 4 limite le courant fourni par la machine ASI au réseau en cas de panne du réseau 1 afin de protéger la charge 2 d'une chute de tension trop forte et d'un appel de puissance important dans les premières instants après la panne du réseau 1 et avant l'ouverture du disjoncteur 5. Afin de permettre des travaux de maintenance à la machine ASI 3, une liaison de bypass 7 avec un disjoncteur bypass 8 permet d'isoler la machine ASI 3 en combinaison avec l'ouverture des disjoncteurs 5 et 6.

Comme illustré sur la figure 2, la machine ASI 3 est constituée principalement d'une machine synchrone 9 à basse impédance interne et d'un accumulateur d'énergie cinétique 10 selon l'invention, qui sont montés sur un arbre principal rotatif 11 ; ce dernier étant monté dans une carcasse 12 à l'aide de roulements 13.

L'arbre principal porte aussi un volant d'inertie 14.

La machine synchrone 4 peut fonctionner comme moteur ou comme alternateur et est constituée de manière connue d'un rotor 15 monté sur l'arbre principal entouré par un stator 16 et d'une excitatrice 17 avec un rotor 17a connecté avec le rotor 15 et un stator 17b pouvant être connecté à une source électrique extérieure pour contrôler le fonctionnement de la machine synchrone 9.

L'accumulateur 10 comprend un tambour accumulateur creux 18 en acier pouvant tourner librement autour de l'axe principal 11 et indépendant de celui-ci au moyen de roulements 19 montés sur l'arbre principal 11.

A l'intérieur du tambour 18 un rotor coaxial 20 est fixé sur l'arbre principal 11.

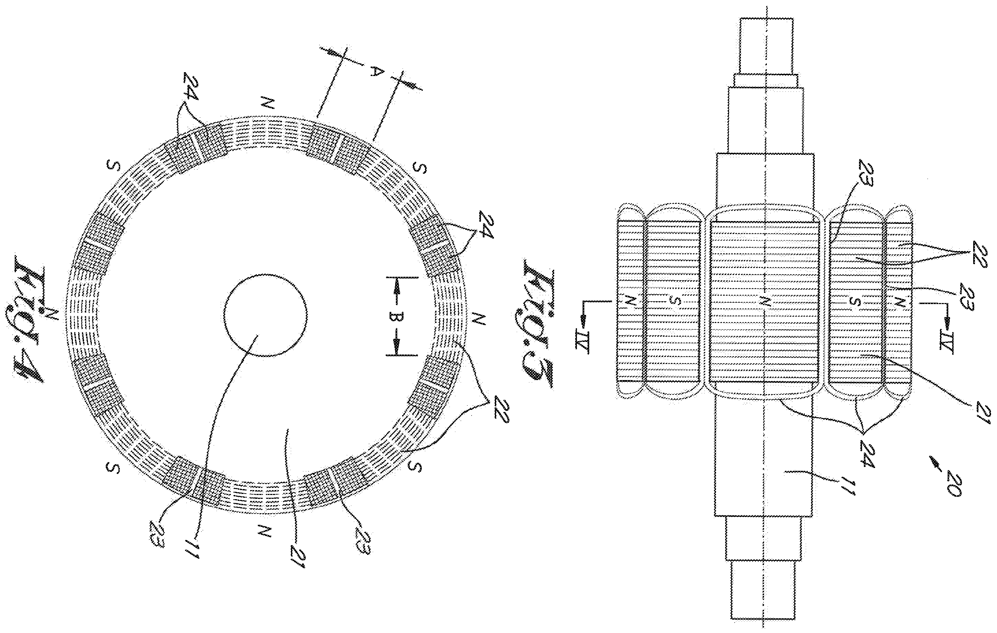

Le rotor 20 est constitué d'un noyau principalement cylindrique en acier avec un certain nombre de pôles 22 délimités par des encoches radiales 23 parallèles à l'axe principal 11. Les encoches ont une largeur maximale A comme montré dans les figures 4, les encoches 23 étant réparties uniformément autour de la circonférence du noyau 21. Les pôles 22 ont une largeur minimale B comme montré sur la figure 4 qui représente la largeur active de ces pôles.

Chaque pôle 22 est pourvu d'un bobinage 24 sous forme d'un conducteur électrique en cuivre qui est embobiné dans les encoches 23 autour du pôle 22 concerné.

Quand un courant est envoyé dans les bobinages 24, les pôles deviennent des pôles magnétiques 22 Nord et Sud pour former un couplage électromagnétique entre le rotor 20 et le tambour 18.

Dans le cas de la figure 4, le rotor 20 est un rotor à huit pôles, bien que le nombre de pôles puisse être différent.

L'accumulateur 10 est pourvu d'une excitatrice 25 avec un rotor 25a qui est fixé sur l'arbre principal 11 et qui est connecté électriquement avec les bobinages 24 du rotor 20 de l'accumulateur 10 et avec un stator pouvant être alimenté par une source électrique extérieure pour contrôler le comportement de l'accumulateur 10.

L'accumulateur 10 comprend aussi un moteur électrique, appelé moteur Pony 26, fait pour lancer le tambour 18 jusqu'à une certaine vitesse lors du démarrage de la machine ASI 3 et pour accumuler de l'énergie cinétique dans le tambour 18.

Le moteur Pony est de préférence un anneau Gramme connu comme décrit dans l'EP 1.533.884 avec un bobinage toroïdal connecté à un variateur de fréquence externe non représenté.

L'invention est spécifiquement caractérisée par la répartition entre la largeur A et la largeur B, ou entre la largeur maximale des encoches 23 et la largeur active des pôles 22, la totalité des largeurs minimales de tous les pôles 22 étant de préférence au moins égale à la totalité des largeurs maximales des encoches 23 dans le cas de l' invention.

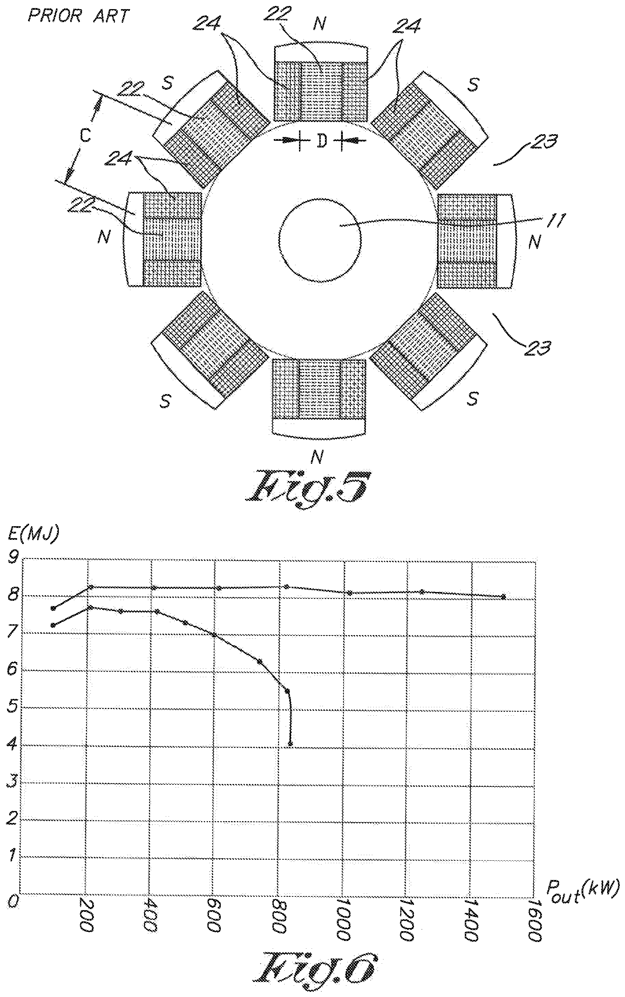

Une telle architecture est atypique si on la compare avec l'architecture d'un rotor classique d'un alternateur avec la même envergure et le même nombre de pôles comme représenté à la figure 5. Un tel rotor classique est par exemple connu de la demande de brevet EP 2.989.713, bien que pour une machine avec une toute autre configuration que celle de la présente invention.

Ce rotor classique de la figure 5, n'appartenant pas à l'invention, est dimensionné avec un tout autre rapport entre la largeur C des encoches et la largeur D active des pôles, afin de pouvoir fonctionner continuellement.

En comparant les figures 4 et 5 on se rend compte que la surface de passage de flux dans la zone B est beaucoup plus grande dans le cas du rotor 20 selon l'invention de la figure 4 que dans la zone D du rotor classique de la figure 5. Or, la puissance que l'on peut obtenir dans un accumulateur d'énergie est, toutes choses restant égales par ailleurs, directement proportionnelle à cette surface.

D'autre part, l'espace (la section) disponible dans les encoches 23 pour les bobinages 24 est d'environ 2 à 3 fois inférieur(e) à celui (celle) dans le cas de l'invention en comparaison avec le rotor conventionnel.

Pour obtenir le même nombre d'ampères-tours dans les bobines 24, et par conséquent la même induction dans les pôles 22, dans les deux cas précités, il faudra, compte tenu de la réduction de section des encoches un courant deux à trois fois supérieur dans les bobines d'excitation du rotor 20 de la figure 4, par conséquent, selon la loi RI², une puissance d'excitation de 4 à 9 fois supérieure dissipée dans un bobinage 24 de volume réduit.

Une comparaison similaire des surfaces de passage de flux peut être faite entre le rotor 20 selon l'invention et le rotor à griffes faisant l'objet du brevet EP 1.533.884 et ayant une même envergure. Dans le cas du rotor à griffes, la surface de passage du flux est de l'ordre de 3 à 4 fois inférieure à la surface correspondante du rotor 20 selon l'invention et les ampères-tours par bobine à peine 10 à 20% supérieurs à ceux du rotor 20 de l'invention, dans les mêmes conditions de densité de courant. Compte tenu également du caractère partiellement homopolaire du rotor à griffes engendrant une variation de flux dans l'entrefer par rapport au rotor selon l'invention de l'ordre de 30 à 40% inférieure, il en découle que le couple et par conséquent la puissance obtenue sont finalement de l'ordre de 3 à 4 fois supérieurs dans le cas de l'invention.

L'utilisation de la machine ASI 3 est expliquée ci-après.

En régime normal, c'est-à-dire sans coupure du réseau 1, les disjoncteurs 5 et 6 sont fermés et le disjoncteur 8 est ouvert.

La machine synchrone 9 est alimentée par le réseau et fonctionne comme moteur pour entraîner l'arbre principal 11 à une vitesse donnée de 1500 tr/min par exemple, correspondant à la fréquence du réseau 1. Le rotor 20 de l'accumulateur 10 et les rotors 17a et 25a des excitatrices 17 et 25 tournent donc à cette même vitesse.

Le tambour 18 est maintenu à une vitesse supérieure à la vitesse de l'arbre principal 11, typiquement entre 1900 et 3000 tr/min, pour accumuler l'énergie cinétique suffisante pour soutenir la charge 2 en cas de coupure du réseau 1 avec une autonomie souhaitée de par exemple 12 secondes.

La vitesse du tambour est réglée en fonction de la charge par l'intermédiaire de moteur Pony 26 et son variateur de fréquence. Si la charge 2 augmente, immédiatement la vitesse du tambour 18 est augmentée pour pouvoir faire face à un défaut du réseau 1 avec une énergie suffisante.

La machine ASI 3 joue aussi le rôle de conditionneur de réseau 1 par sa combinaison avec la self 4, la basse impédance de la machine synchrone 9 et l'inertie du volant.

Elle constitue un filtre vis-à-vis de toutes les perturbations de courte durée qui ne dépassent pas 60 à 80 ms qui viendraient sur le réseau 1 ainsi qu'un filtre vis-à-vis des harmoniques qui seraient présents sur la tension de la charge 2 ou la tension du réseau.

Quand une panne plus grave du réseau 1 est détectée, par exemple quand le réseau 1 disparaît carrément ou s'il y a une chute de tension trop forte, le système de contrôle de la machine ASI ouvre le disjoncteur d'entrée 5 immédiatement pour éviter que la machine synchrone 9 doive alimenter le réseau 1 en plus de la charge 2. En effet, en cas de panne (généralement éloignée de l'entrée de l'ASI), le réseau 1 présente une charge considérable pour l'ASI, que cette dernière ne serait pas capable de maintenir très longtemps sur un réseau 1.

La self 4 est là pour limiter l'importance du courant qu'on peut renvoyer dans le réseau 1 et réduire le niveau des harmoniques venant du réseau vers la charge et réciproquement.

Dès que le défaut réseau 1 est détecté et que le disjoncteur d'entrée 5 est ouvert, le transfert d'énergie du tambour 18 est initié et simultanément un courant DC est injecté dans l'excitatrice 25, qui produira une tension AC transformée en courant DC par un redresseur non représenté sur les figures.

On établit ainsi un couplage électromagnétique entre le tambour 18 et l'arbre principal 11, ce qui va maintenir la vitesse de la machine synchrone 9 aux environs de 50 Hz et permettra d'alimenter les utilisateurs sans perturbation.

Le courant que l'on envoie dans l'excitatrice 25 agit comme un levier important, puisque avec quelques ampères on arrive à contrôler une puissance considérable au travers d'une petite excitatrice 25.

L'énergie cinétique stockée dans le tambour 18 avec une vitesse relative par rapport à l'arbre principal de 1500 tr/min par exemple en pleine puissance est utilisée pour entraîner la machine synchrone 9 dans sa fonction d'alternateur pour alimenter la charge 2. Au fur et à mesure que l'énergie cinétique décroit en absence du réseau, la vitesse du tambour 18 diminue et se rapproche de plus en plus de la vitesse de l'axe principal jusqu'au moment où le couplage électromagnétique entre le tambour et le rotor 20 de l'accumulateur 10 devient insuffisant pour continuer à entrainer la machine synchrone 9.

Les performances de la machine ASI selon l'invention sont nettement meilleures que dans l'ASI avec un rotor à griffes selon l'EP1.533.884 de même taille, comme on peut le constater à partir des diagrammes des performances expérimentales des figures 6 à 8.

La figure 6 représente la capacité de stockage énergétique de la machine ASI 3 exprimée en MJ en fonction de la puissance de sortie de la machine ASI 3 à livrer à la charge 2.

L'énergie accumulée exprime le produit de l'autonomie et de la puissance du type de la machine ASI 3.

Sur le diagramme de la figure 6 on constate que pour une machine de puissance nominale de 800 kW réalisée selon le brevet EP1.533.884, la capacité énergétique disponible de cette machine est portée de 6 à 8 MJ par le simple et seul remplacement du rotor à griffes par le rotor faisant partie de l'invention, toutes autres choses restant égales par ailleurs.

Cela veut dire que dans le premier cas l'énergie accumulée de 6 MJ donne une autonomie de 7,5 sec et dans le cas de l'invention une autonomie de plus de 10 sec.

Avec l'ancien rotor à griffes on se rend compte qu'au-fur et-à mesure que la puissance de sortie augmente au-delà de 400 kW l'énergie disponible diminue et qu'il est pratiquement impossible de fournir plus que 800 kW.

Avec le nouveau rotor 20, il est possible d'atteindre des puissances au-delà de la puissance maximale du rotor à griffes, et même plus que de doubler cette puissance dans le cas la figure 6.

Il faudra évidemment une machine synchrone 9 de puissance adaptée.

En plus, l'énergie accumulée est pratiquement constante sur toute la plage des puissances de sortie, ce qui est plus pratique pour caractériser la machine ASI 3 avec un seul paramètre comme une machine de 8,2 MJ, permettant d'en déduire facilement l'autonomie en fonction de la puissance de la charge 2 à protéger, le cas échéant donnant une autonomie de 16,4 secondes pour une charge de 500 kW, une autonomie de 8,2 secondes pour une charge 2 de 1000 kW et 5,5 sec pour 1500 kW.

Bien qu'à pleine puissance, pour certaines applications, on n'arrive pas à une autonomie de 12 secondes, une autonomie plus courte est suffisante.

On obtient ainsi un plus grand domaine d'utilisation avec des machines ASI de grosses puissances mais de faibles autonomies. Cela veut dire que pour le même prix d'une machine de puissance moyenne et de grande autonomie on peut avoir une machine de puissance double, voire triple, et de plus courte autonomie, ce qui n'était pas possible actuellement.

L'écart entre les courbes de la figure 6 peut s'expliquer par le fait qu'avec l'ancien rotor le couplage électromécanique entre le tambour 18 et le rotor à griffes est perdu quand la vitesse du tambour 18 décroît sous 1700 tr/min avec une vitesse de 1500 tr/min pour le rotor, en comparaison avec le rotor atypique 20 selon l'invention avec lequel le couplage est tenu jusqu'à une vitesse tambour de quasi 1500 tr/min.

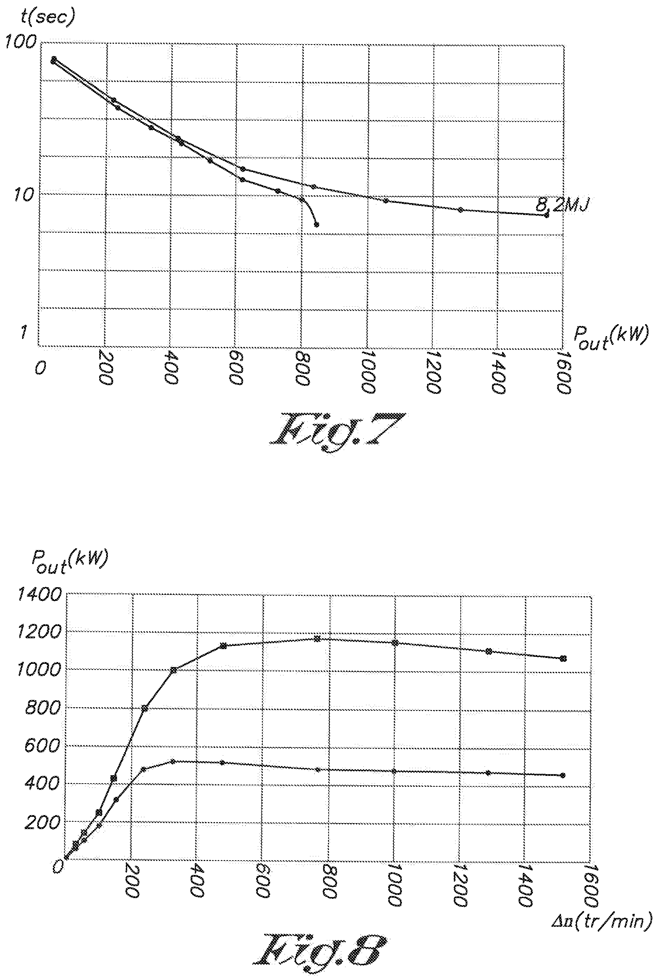

La figure 7 montre le diagramme de l'autonomie de la machine ASI dans les deux cas.

On voit que la machine ASI 3 selon l'invention a une meilleure autonomie que l'ancienne machine dans toute la gamme de puissances de celle-ci et conserve encore une autonomie acceptable pour certaines applications pour des puissances supérieures.

La figure 8 montre la puissance de sortie de la machine ASI 3 en fonction de la vitesse relative entre le tambour 18 et le rotor sur l'arbre principal 11, 50 msec après l'application d'une tension intermédiaire de 300VDC sur l'excitatrice 25.

Si on applique une tension de 300VDC au moment où le tambour 18 tourne 1000 tr/min plus vite que l'arbre principal 11, on constate qu'après 50 msec on obtient un couple avec le rotor à griffes qui donne une puissance d'environ 500 KW, tandis qu'avec le nouveau rotor on obtient déjà une puissance de 1150 kW.

Pour une vitesse relative à pleine puissance de 1500 tr/min on passe d'une puissance disponible de 460 kW à 1120 kW. Cela veut dire qu'après 50 ms on aura atteint une puissance qui évitera une chute de vitesse trop rapide et une sortie de la tolérance en fréquences (généralement de -1 Hz).

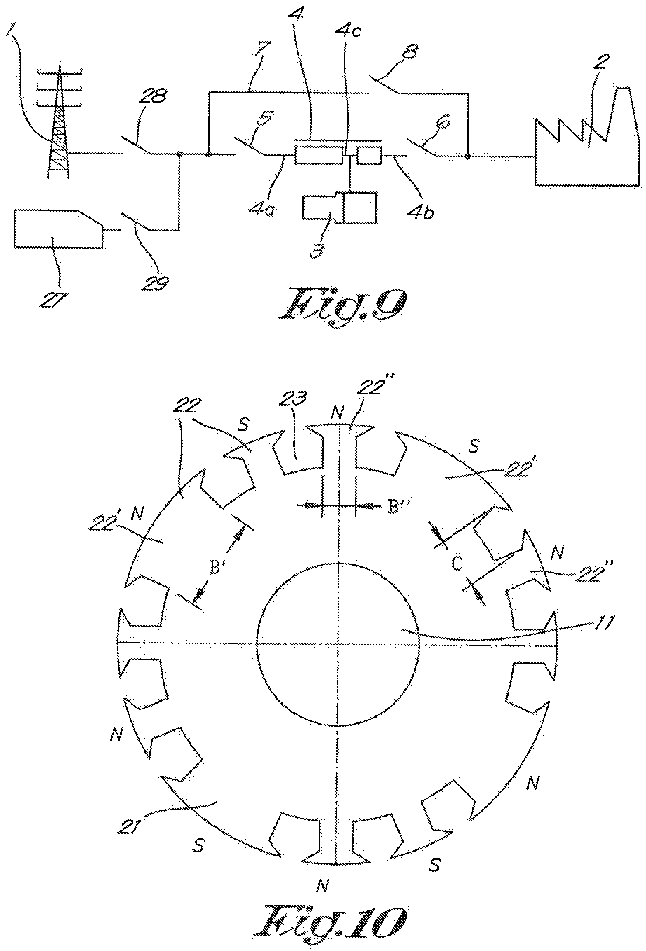

Si l'autonomie de la machine ASI 3 n'est pas suffisante pour couvrir le temps que dure une coupure du réseau 1, il est possible d'ajouter un groupe électrogène 27 comme indiqué sur la figure 9 au moyen d'un inverseur de source constitué par deux disjoncteurs 28 et 29.

Le noyau 21 représenté dans la figure 10 est un noyau 21 d'un rotor 20 alternatif selon l'invention qui diffère du noyau du rotor 20 de la figure 4 par le fait que les encoches 23 ne sont pas réparties uniformément autour du noyau et que de ce fait la largeur B des pôles 22 est différente selon leur position angulaire, avec une configuration intégrant des pôles larges 22', ayant une largeur minimale B', et des pôles étroits 22", ayant une largeur minimale B".

Dans la figure 10 les pôles 22 sont organisés de la façon suivante :
- les pôles 22 doivent être alternativement N & S à la périphérie du rotor 20;
- les pôles larges 22' doivent être multiples de deux et alternativement N & S à la périphérie du rotor 20;
- les pôles étroits 22" doivent être multiples de deux;
- la somme des largeurs B' et B" de la totalité des pôles 22' et 22" à leur endroit le plus étroit doit être au moins égale à et de préférence nettement supérieure à la somme des largeurs C de la totalité des encoches 23 à leur endroit le plus large, qui dans le cas de la figure 10 est situé sur un autre diamètre.

Une telle organisation des pôles peut être envisagée dans le but de modifier la caractéristique de couple en fonction de la vitesse relative entre le rotor 20 et le tambour 18.

Il est évident que l'invention n'est nullement limitée aux réalisations décrites ci-avant, mais que de nombreuses modifications peuvent être apportées à l'accumulateur d'énergie cinétique décrit ci-avant sans sortir du cadre de l'invention telle que définie dans les revendications suivantes.

## Revendications

1. Rotor pour un accumulateur d'énergie d'une machine ASI (Alimentation Sans Interruption), le rotor (22) comprenant un noyau en fer (21) avec un certain nombre de pôles (22) délimités par des encoches (23) parallèles à l'axe du rotor (20) réparties autour de la circonférence du noyau (21) qui, pour chaque pôle (22), est pourvu d'un bobinage (24) embobiné dans les encoches (23) autour du pôle (22) concerné et dont la largeur cumulée de la totalité des pôles (22) dans leur partie la plus étroite est au moins égale à la largeur cumulée de la totalité des encoches (23) dans leur partie la plus large, la largeur étant mesurée dans une coupe perpendiculaire à l'axe du rotor (20),
**caractérisé en ce que** les pôles (22) ont une largeur différente selon leur position angulaire, comportant des pôles larges (22'), ayant une première largeur minimale (B'), et des pôles étroits, ayant une seconde largeur minimale (B"), qui sont organisés de la façon suivante:
- les pôles (22) doivent être alternativement N & S à la périphérie du rotor (20);
- les pôles larges (22') doivent être multiples de deux et alternativement N & S à la périphérie du rotor (20);
- les pôles étroits (22") doivent être multiples de deux.

2. Rotor selon la revendication 1, **caractérisé en ce que** la largeur cumulée de la totalité des pôles (22) dans leur partie la plus étroite est au moins le double de la largeur de la totalité des encoches (23) dans leur partie la plus large.

3. Machine ASI (Alimentation Sans Interruption), comprenant une machine synchrone (9) couplée à un accumulateur d'énergie cinétique (10) lequel comprend essentiellement:
- une carcasse (12);
- un arbre principal (11) monté d'une manière rotative dans la carcasse (12) et étant couplé avec la machine synchrone (9);
- un tambour (18) creux coaxial pouvant tourner librement autour de l'axe principal (11) et indépendant de celui-ci;
- un moteur électrique (26), appelé moteur Pony, pour lancer le tambour (18) jusqu'à une certaine vitesse donnée lors du démarrage de l'ASI pour accumuler de l'énergie cinétique dans le tambour (18);
- un rotor (20) fixé sur l'arbre principal d'une manière coaxiale avec le tambour (18) et muni de bobines (24) reliées avec une excitatrice (25) pour réaliser un couplage électromagnétique entre le tambour (18) et le rotor (20) en cas de panne du réseau (1) en vue de récupérer l'énergie cinétique stockée dans le tambour (18) afin d'entraîner la machine synchrone (9) quand un courant électrique est envoyé dans les bobines (24) du rotor (20) par l'intermédiaire de l'excitatrice (25);
**caractérisée en ce que** le rotor est un rotor selon la revendication 1 ou 2.

4. Machine ASI selon la revendication 3, **caractérisée en ce que** la largeur cumulée de la totalité des pôles (22) dans leur partie la plus étroite est au moins le double de la largeur de la totalité des encoches (23) dans leur partie la plus large.

5. Machine ASI selon la revendication 3 ou 4, **caractérisée en ce que** le rotor (20) de l'accumulateur d'énergie cinétique (10) est tel qu'il permet une densité de courant instantané au niveau des bobinages (24) qui est supérieure à 8 Amp/mm², de préférence supérieure à 10 Amp/mm².

6. Machine ASI selon la revendication 5, **caractérisée en ce que** le rotor (20) de l'accumulateur d'énergie cinétique (10) est tel qu'il permet de supporter sans défaillir, càd sans élévation de température préjudiciable au bobinage, une densité de courant instantané au niveau des bobinages qui est supérieure à 8 Amp/mm², de préférence supérieure à 10 Amp/mm² pendant une durée d'au moins douze secondes, de préférence pendant au moins 16 secondes, mieux encore pendant au moins 24 secondes.

7. Machine ASI selon l'une quelconque des revendications 3 à 6, **caractérisée en ce que** l'excitatrice (25) comprend un stator (25b) et un rotor (25a) qui est fixé sur l'arbre principal (11) et que les bobines du stator (25b) sont reliées à une source de courant électrique AC alternatif et/ou de courant DC continu.

8. Machine ASI selon l'une quelconque des revendications 3 à 7, **caractérisée en ce que** le stator du moteur Pony (26) est réalisé sous forme d'un anneau Gramme.

9. Machine ASI selon la revendication 8, **caractérisée en ce que** l'anneau Gramme (26) est relié à une alimentation à fréquence variable.

10. Machine ASI selon l'une quelconque des revendications 3 à 9, **caractérisée en ce que** le tambour (18) est réalisé en acier.

11. Machine ASI selon l'une quelconque des revendications 3 à 10, **caractérisée en ce que** la machine ASI a une capacité énergétique d'au moins 8 MJ dans une plage de puissance de sortie entre 200 kW et 1400 kW.

12. Machine ASI selon la revendication 11, **caractérisée en ce que** la machine ASI a une capacité énergétique d'au moins 8 MJ qui reste principalement constante dans la plage de puissances de sortie entre 200 kW et 1400 kW.

13. Machine ASI selon l'une quelconque des revendications 3 à 12, **caractérisée en ce que** la machine ASI (3) est connectée à la borne intermédiaire (4c) d'une self (4) à trois bornes qui relient la charge (2) au réseau (1).

14. Machine ASI selon la revendication 13, **caractérisée en ce que** le réseau (1) est branché sur la borne d'entrée (4a) de la self (4) à trois bornes en parallèle à un groupe électrogène (27) qui est mis en service à partir du moment où le réseau (1) est hors service pendant un temps déterminé de plus de quelques secondes.

15. Utilisation d'un rotor selon la revendication 1 ou 2, dans un accumulateur d'énergie cinétique d'une machine ASI, l'accumulateur d'énergie cinétique (10) étant destiné à fonctionner avec un rotor à griffes, l'accumulateur comprenant essentiellement :
- une carcasse (12);
- un arbre principal (11) monté d'une manière rotative dans la carcasse (12) et étant couplé avec une machine synchrone (9);
- un tambour creux (18) coaxial pouvant tourner librement autour de l'axe principal (11) et indépendant de celui-ci ;
- un moteur (26), appelé moteur Pony, pour lancer le tambour (18) jusqu'à une certaine vitesse donnée lors du démarrage de l'ASI pour accumuler de l'énergie cinétique dans le tambour (18);
- le rotor étant fixé en lieu et place du rotor à griffes sur l'arbre principal d'une manière coaxiale avec le tambour (18) et avec le même encombrement, les bobines (24) du rotor (20) étant reliées avec une excitatrice (25) pour réaliser un couplage électromagnétique entre le tambour (18) et le rotor (20) en cas de panne du réseau en vue de récupérer l'énergie cinétique stockée dans le tambour (18) afin d'entraîner la machine synchrone (9) quand un courant électrique est envoyé dans les bobines (24) du rotor (20) par l'intermédiaire de l'excitatrice.

## Patentansprüche

1. Rotor für einen Energiespeicher einer USV-Maschine (unterbrechungsfreie Stromversorgung), wobei der Rotor (22) einen Eisenkern (21) mit einer Anzahl von Polen (22) umfasst, die durch zur Rotorachse (20) parallele Nuten (23) begrenzt sind, die um den Umfang des Kerns (21) verteilt sind, der für jeden Pol (22) mit einer Wicklung (24) versehen ist, die in die Nuten (23) um den betreffenden Pol (22) gewickelt ist und deren kumulierte Breite der gesamten Pole (22) in ihrer schmalsten Stelle mindestens gleich der kumulierten Breite der gesamten Nuten (23) an ihrer breitesten Stelle ist, wobei die Breite in einem zur Achse des Rotors (20) senkrechten Querschnitt gemessen wird, **dadurch gekennzeichnet, dass** die Pole (22) nach ihrer Winkelposition eine unterschiedliche Breite aufweisen, wobei es breite Pole (22') mit einer ersten Mindestbreite (B') und schmale Pole mit einer zweiten Mindestbreite (B") gibt, die wie folgt angeordnet sind:
- die Pole (22) müssen an dem Umfang des Rotors (20) alternativ N & S sein;
- die breiten Pole (22') müssen Vielfache von zwei sein und am Umfang des Rotors (20) alternativ N & S sein;
- die schmalen Pole (22") müssen Vielfache von zwei sein.

2. Rotor nach Anspruch 1, **dadurch gekennzeichnet, dass** die kumulierte Breite der gesamten Pole (22) an ihrer schmalsten Stelle mindestens doppelt so groß ist wie die Breite der gesamten Nuten (23) an ihrer breitesten Stelle.

3. USV-Maschine (unterbrechungsfreie Stromversorgung), die aus einer Synchronmaschine (9) besteht, die mit einem kinetischen Energiespeicher (10) gekoppelt ist, der im Wesentlichen das Folgende umfasst:
- ein Gehäuse (12);
- eine Hauptwelle (11), die drehbar in dem Gehäuse (12) angebracht und mit der Synchronmaschine (9) gekoppelt ist;
- eine koaxiale hohle Trommel (18), die sich frei um die Hauptwelle (11) drehen kann und von dieser unabhängig ist;
- einen Elektromotor (26), einen sogenannten Pony-Motor, um die Trommel (18) beim Start der USV bis zu einer bestimmten Geschwindigkeit zu bringen, mit dem Ziel kinetische Energie in der Trommel (18) zu speichern;
- einen Rotor (20), der koaxial zur Trommel (18) auf der Hauptwelle befestigt ist und mit Spulen (24) ausgestattet ist, die mit einem Erreger (25) verbunden sind, um eine elektromagnetische Kopplung zwischen der Trommel (18) und dem Rotor (20) bei einem Ausfall des Netzes (1) auszuführen, mit dem Ziel die in der Trommel (18) gespeicherte kinetische Energie zurückzugewinnen, um die Synchronmaschine (9) anzutreiben, wenn über den Erreger (25) elektrischer Strom in die Spulen (24) des Rotors (20) geleitet wird;
**dadurch gekennzeichnet, dass** der Rotor ein Rotor nach Anspruch 1 oder 2 ist.

4. ASI-Maschine nach Anspruch 3, **dadurch gekennzeichnet, dass** die kumulierte Breite der gesamten Pole (22) an ihrer schmalsten Stelle mindestens doppelt so groß ist wie die Breite der gesamten Nuten (23) an ihrer breitesten Stelle.

5. ASI-Maschine nach Anspruch 3 oder 4, **dadurch gekennzeichnet, dass** der Rotor (20) des kinetischen Energiespeichers (10) derart ausgeführt ist, dass er eine momentane Stromdichte auf der Ebene der Wicklungen (24) von mehr als 8 Amp/mm², vorzugsweise mehr als 10 Amp/mm² ermöglicht.

6. ASI-Maschine nach Anspruch 5, **dadurch gekennzeichnet, dass** der Rotor (20) des kinetischen Energiespeichers (10) derart ausgeführt ist, dass er ohne Ausfall, d. h. ohne für die Wicklung schädlichen Temperaturanstieg, die Unterstützung von einer momentanen Stromdichte auf der Ebene der Wicklungen von mehr als 8 Amp/mm², vorzugsweise mehr als 10 Amp/mm², während einer Dauer von mindestens zwölf Sekunden, vorzugsweise mindestens 16 Sekunden, besser noch mindestens 24 Sekunden, ermöglicht.

7. ASI-Maschine nach einem der Ansprüche 3 bis 6, **dadurch gekennzeichnet, dass** der Erreger (25) einen Stator (25b) und einen auf der Hauptwelle (11) befestigten Rotor (25a) umfasst, und dass die Spulen des Stators (25b) mit einer alternativen Wechselstrom- und/oder Gleichstromquelle verbunden sind.

8. ASI-Maschine nach einem der Ansprüche 3 bis 7, **dadurch gekennzeichnet, dass** der Stator des Pony-Motors (26) als Gramme-Ring ausgeführt ist.

9. ASI-Maschine nach Anspruch 8, **dadurch gekennzeichnet, dass** der Gramme-Ring (26) mit einer frequenzgeregelten Versorgung verbunden ist.

10. ASI-Maschine nach einem der Ansprüche 3 bis 9, **dadurch gekennzeichnet, dass** die Trommel (18) aus Stahl ausgeführt ist.

11. ASI-Maschine nach einem der Ansprüche 3 bis 10, **dadurch gekennzeichnet, dass** die ASI-Maschine eine Energiekapazität von mindestens 8 MJ aufweist, die in dem Bereich zwischen 200 kW und 1400 kW liegt.

12. ASI-Maschine nach Anspruch 11, **dadurch gekennzeichnet, dass** die ASI-Maschine eine Energiekapazität von mindestens 8 MJ aufweist, die in dem Bereich der Leistungswerte zwischen 200 kW und 1400 kW im Wesentlichen konstant bleibt.

13. ASI-Maschine nach einem der Ansprüche 3 bis 12, **dadurch gekennzeichnet, dass** die ASI-Maschine (3) mit dem Zwischenanschluss (4c) einer Selbstinduktionsspule (4) verbunden ist, die drei Anschlüsse umfasst, die die Last (2) mit dem Netz (1) verbinden.

14. ASI-Maschine nach Anspruch 13, **dadurch gekennzeichnet, dass** das Netz (1) an den Eingangsanschluss (4a) der drei Anschlüsse (4) umfassenden Selbstinduktionsspule parallel zu einem Stromaggregat (27) angeschlossen ist, das in Betrieb genommen wird, sobald das Netz (1) für eine bestimmte Zeit von mehr als einigen Sekunden außer Betrieb ist.

15. Verwendung eines Rotors nach Anspruch 1 oder 2 in einem kinetischen Energiespeicher einer ASI-Maschine, wobei der kinetische Energiespeicher (10) für den Betrieb mit einem Klauenrotor ausgelegt ist, wobei der Energiespeicher im Wesentlichen das Folgende umfasst:
- ein Gehäuse (12);
- eine Hauptwelle (11), die drehbar in dem Gehäuse (12) angebracht und mit der Synchronmaschine (9) gekoppelt ist;
- eine koaxiale hohle Trommel (18), die sich frei um die Hauptwelle (11) drehen kann und von dieser unabhängig ist;
- einen Elektromotor (26), einen sogenannten Pony-Motor, um die Trommel (18) beim Start der USV bis zu einer bestimmten Geschwindigkeit zu bringen, mit dem Ziel kinetische Energie in der Trommel (18) zu speichern;
- einen Rotor (20), der koaxial zur Trommel (18) auf der Hauptwelle befestigt ist und mit Spulen (24) ausgestattet ist, die mit einem Erreger (25) verbunden sind, um eine elektromagnetische Kopplung zwischen der Trommel (18) und dem Rotor (20) bei einem Ausfall des Netzes (1) auszuführen, mit dem Ziel die in der Trommel (18) gespeicherte kinetische Energie zurückzugewinnen, um die Synchronmaschine (9) anzutreiben, wenn über den Erreger (25) elektrischer Strom in die Spulen (24) des Rotors (20) geleitet wird.

## Claims

1. A rotor for an energy accumulator of a UPS (Uninterruptible Power Supply) machine, the rotor (22) comprising an iron core (21) with a certain number of poles (22), delimited by notches (23) parallel to the axis of the rotor (20), distributed around the circumference of the core (21) which, for each pole (22), is provided with a coil (24) wound in the notches (23) around the pole (22) concerned and whose cumulative width of all the poles (22) at their narrowest part is at least equal to the cumulative width of all the notches (23) at their widest part, the width being measured in a cross-section view perpendicular to the axis of the rotor (20), **characterized in that** the poles (22) have a different width depending on their angular position, comprising wide poles (22') having a first minimum width (B') and narrow poles having a second minimum width (B")and are arranged as follows:
- the poles (22) must be alternately N & S at the periphery of the rotor (20);
- the wide poles (22') must be in multiples of two and alternately N & S at the periphery of the rotor (20);
- the narrow poles (22") must be in multiples of two.

2. The rotor according to claim 1, **characterized in that** the cumulative width of all the poles (22) at their narrowest part is at least twice the width of all the notches (23) at their widest part.

3. A UPS (Uninterruptible Power Supply) machine comprising a synchronous machine (9) coupled to a kinetic energy accumulator (10) which essentially comprises:
- a frame (12);
- a main shaft (11) rotatably mounted in the frame (12) and being coupled to the synchronous machine (9);
- a coaxial hollow drum (18) capable of rotating freely around the main axis (11) and independent thereof;
- an electric motor (26), called a Pony motor, for launching the drum (18) up to a certain speed set at the UPS start-up, in order to accumulate kinetic energy in the drum (18);
- a rotor (20) fixed on the main shaft coaxially with the drum (18) and provided with coils (24) connected to an exciter (25) in order to achieve an electromagnetic coupling between the drum (18) and the rotor (20) in the event of network failure (1) in order to recover the kinetic energy stored in the drum (18) so as to drive the synchronous machine (9) when an electric current is sent to the coils (24) of the rotor (20) through the exciter (25);
**characterized in that** the rotor is a rotor according to claim 1 or 2.

4. The UPS machine according to claim 3, **characterized in that** the cumulative width of all the poles (22) at their narrowest part is at least twice the width of all the notches (23) at their widest part.

5. The UPS machine according to claim 3 or 4, **characterized in that** the rotor (20) of the kinetic energy accumulator (10) is such that it allows an instantaneous current density at the level of the coils (24) which is greater than 8 Amp/mm², preferably greater than 10 Amp/mm².

6. The UPS machine according to claim 5, **characterized in that** the rotor (20) of the kinetic energy accumulator (10) is such that it can support without failing, i.e., without temperature rise detrimental to the coil, an instantaneous current density at the coils which is greater than 8 Amp/mm², preferably greater than 10 Amp/mm² for a period of at least twelve seconds, preferably for at least 16 seconds, even more for at least 24 seconds.

7. The UPS machine according to any one of claims 3 to 6, **characterized in that** the exciter (25) comprises a stator (25b) and a rotor (25a) which is fixed on the main shaft (11), and **in that** the coils of the stator (25b) are connected to a source of alternating electric current AC and/or direct current DC.

8. The UPS machine according to any one of claims 3 to 7, **characterized in that** the stator of the Pony motor (26) is produced in the form of a Gramme ring.

9. The UPS machine according to claim 8, **characterized in that** the Gramme ring (26) is connected to a variable frequency power supply.

10. The UPS machine according to any one of claims 3 to 9, **characterized in that** the drum (18) is made of steel.

11. The UPS machine according to any one of claims 3 to 10, **characterized in that** the UPS machine has an energy capacity of at least 8 MJ in an output power range between 200 kW and 1400 kW.

12. The UPS machine according to claim 11, **characterized in that** the UPS machine has an energy capacity of at least 8 MJ which remains mainly constant in the range of output powers between 200 kW and 1400 kW.

13. The UPS machine according to any one of claims 3 to 12, **characterized in that** the UPS machine (3) is connected to the intermediate terminal (4c) of a choke (4) with three terminals which connect the load (2) to the network (1).

14. The UPS machine according to claim 13, **characterized in that** the network (1) is connected to the input terminal (4a) of the choke (4) with three terminals in parallel to a generator set (27) which is turned on when the network (1) is down for a determined period of more than a few seconds.

15. Use of a rotor according to claim 1 or 2, in a kinetic energy accumulator of a UPS machine, the kinetic energy accumulator (10) being intended to operate with a claw rotor, the accumulator essentially comprising:
- a frame (12);
- a main shaft (11) rotatably mounted in the frame (12) and coupled to a synchronous machine (9);
- a coaxial hollow drum (18) capable of rotating freely around the main axis (11) and independent thereof;
- a motor (26), called a Pony motor, for launching the drum (18) up to a certain speed set at the UPS start-up, in order to accumulate kinetic energy in the drum (18);
- the rotor being fixed in place of the claw rotor on the main shaft, coaxially with the drum (18), and having the same size, the coils (24) of the rotor (20) being connected to an exciter (25) in order to achieve an electromagnetic coupling between the drum (18) and the rotor (20) in the event of a network failure in order to recover the kinetic energy stored in the drum (18) so as to drive the synchronous machine (9) when an electric current is sent to the coils (24) of the rotor (20) through the exciter.
